# EUROPEAN PATENT APPLICATION

(11) **EP 4 523 533 A1**
(43) Date of publication of application: **19.03.2025**
(21) Application number: 22955061.1
(22) Date of filing: 16.08.2022
(51) Int. Cl.: A01N 59/16, A01N 25/08, A01P 3/00

(54) **DISINFECTANT, ANTI-INFECTIVE TEXTILE MATERIAL, ANTI-INFECTIVE TEXTILE PRODUCT, PRODUCTION METHOD, AND PRODUCTION DEVICE**

(30) Priority: 12.08.2022 JP 2022128885
(71) Applicant: Susume Co., Ltd., Chino City, Nagano 391-0213 (JP)
(72) Inventor: SAKURADA, Tsukasa, Chino City, Nagano 3910213 (JP)
(74) Representative: dompatent von Kreisler Selting Werner - Partnerschaft von Patent- und Rechtsanwälten mbB
(86) International application number: PCT/JP2022/030985
(87) International publication number: WO 2024/034147

(57) **Abstract**

Provided are a disinfectant capable of maintaining a bactericidal effect over an extended period of time even in a place where light is not present, capable of reducing the production cost, and exhibiting high biocompatibility, an anti-infective fibrous material, an anti-infective fibrous product, a method for producing the same, and an apparatus for producing the same. A disinfectant according to one aspect of the present invention is a disinfectant containing titanium dioxide that adsorbs silver ions. The disinfectant is characterized by further containing an aqueous resin binder to which a thermosetting crosslinking agent is applied, so that the disinfectant has biocompatibility; and characterized in that the titanium dioxide has a particle size of 100 nm or more and 1 µm or less and a weight distribution of particles, having a particle size of 100 nm or less, of less than 0.3%, so that the disinfectant does not exhibit environmental toxicity caused by nanoparticles.

## Description

### Technical Field

The present invention relates to a disinfectant, an anti-infective fibrous material, an anti-infective fibrous product, a method for producing the same, and an apparatus for producing the same.

### Background Art

Conventionally, antimicrobials in a solid or liquid form have been known. A photocatalyst-related technique using a redox power of a photocatalyst that is a solid antimicrobial has been known. The U.S. Environmental Protection Agency (EPA) has approved copper and a copper alloy as a solid disinfectant for the first time. A general photocatalyst can function for an extended period of time due to the insolubility of the photocatalyst itself. However, the photocatalyst functions only under ultraviolet light, that is, it does not function in the dark. Furthermore, the photocatalyst causes radical decomposition of bacteria, which is composed of proteins or organic substances. However, it is required for the photocatalyst to use a resin binder for fixing a solid such as titanium dioxide. This resin binder is an organic substance. Moreover, when the resin binder is used for fibers, the fibers themselves are also an organic substance. In this case, the photocatalyst causes decomposition of the resin binder and the fibers, and thus the solid antimicrobial is not practical. On the other hand, a liquid antimicrobial such as an alcohol or hypochlorite usually functions without light, and immediately achieves an excellent antimicrobial effect in an ambient environment. However, the liquid antimicrobial is vaporized or evaporated quickly, and thus the liquid antimicrobial functions only for a short time. In general, the effect of a liquid antimicrobial is transient, and not persistent, and thus an immediately acting bactericidal effect is required. Most liquid antimicrobials exhibit toxicity, and thus have a drawback in that the environment will be negatively impacted.

Patent Literature 1 indicated below describes that in addition to the photocatalyst, silver ions are used as an antimicrobial. Patent Literature 1 describes that a polyacrylic acid is used as a binder to crosslink the silver ions with an acetylacetone complex or an amino acid complex, and thereby the silver ions are applied as an antimicrobial to fibers.

### Citation List

### Patent Literature

PTL 1: Japanese Patent Application Laid-Open No. 2011-042642

### Summary of Invention

### Technical Problem

In Patent Literature 1, a polyacrylic acid is used as a binder. Since the polyacrylic acid has a high viscosity and curing properties, its use is problematic in that processing is difficult. Furthermore, the polyacrylic acid may be unintendedly browned after curing due to a Maillard reaction. Furthermore, a large amount of ammonia is required for production of the binder, and this ammonia has a negative impact on the environment. In addition, there is a problem that the cost of the binder is high. In Patent Literature 1, silver ions are crosslinked with an acetylacetone complex or an amino acid complex. However, the silver ions are difficult to be stably retained in the complex for an extended period of time under various environmental conditions. Crosslinking the silver ions with the complex also causes an increase in the cost.

In Patent Literature 1, the photocatalyst is used as an antimicrobial material for bactericidal fibers. For example, as a photocatalyst having high photocatalytic activity, a titanium dioxide catalyst is an antimicrobial material having no cytotoxicity, but in a place where light is present, there occurs a problem in that the titanium dioxide catalyst breaks down the catalyst-supporting substrate and organic substances. For example, in the field of medical textiles, stringent requirements for biocompatibility must be satisfied for registration under the U.S. Food and Drug Administration (FDA). Biocompatibility, especially non-cytotoxicity is required for not only the antimicrobial material for imparting an antimicrobial effect to fibers, but also all materials such as a binder, a crosslinking agent, and other additives.

The present invention has been made to solve the aforementioned problems. An object of the present invention is to provide a disinfectant that is capable of maintaining a bactericidal effect over an extended period of time even in a place where light is not present, is capable of reducing the production cost, and has biocompatibility, as well as an anti-infective fibrous material, an anti-infective fibrous product, a method for producing the same, and an apparatus for producing the same.

### Solution To Problem

A disinfectant according to one aspect of the present invention is a disinfectant containing titanium dioxide that adsorbs silver ions. The disinfectant is characterized by further containing an aqueous resin binder to which a thermosetting crosslinking agent is applied, so that the disinfectant has biocompatibility; and characterized in that the titanium dioxide has a particle size of 100 nm or more and 1 µm or less and a weight distribution of particles, having a particle size of 100 nm or less, of less than 0.3%, so that the disinfectant does not exhibit environmental toxicity caused by nanoparticles. The disinfectant according to one aspect of the present invention is a disinfectant containing titanium dioxide on which silver ions are densely adsorbed and having high-performance bactericidal properties. Examples of the biocompatibility may include cytotoxicity, skin sensitization, and skin irritation. The disinfectant according to one aspect of the present invention has no problem with cytotoxicity, skin sensitization, and skin irritation, and exhibits excellent biocompatibility.

Since titanium dioxide is white and has a high light-shielding property, titanium dioxide is used as various pigments in a wide range of applications. The catalytic activity of titanium dioxide is adjusted by the burning conditions and the like during production. In particular, titanium dioxide used as a pigment is used for coating materials, cosmetics, and the like, and thus the titanium dioxide is considered to exhibit low photocatalytic activity to avoid decomposition of the surrounding organic substances. The pigment includes one having a surface covered with an inorganic material to further suppress the photocatalytic activity of titanium dioxide.

Like the titanium dioxide used as the pigment, the titanium dioxide particles used in the present invention have lower photocatalytic activity than titanium dioxide particles used as a photocatalyst for disinfection. Use of titanium dioxide particles having low photocatalytic activity exerts a bactericidal effect based on photocatalytic activity in a place where light is present. However, the catalytic activity of the titanium dioxide particles used in the present invention is restricted within a predetermined range, and thus adverse effects such as deterioration of fibrous material are not caused. Commercially available titanium dioxide particles for pigments have lower photocatalytic activity than titanium dioxide for disinfection, but are inexpensive and economic. By using titanium dioxide particles that have a particle size of 100 nm or more and 1 µm or less and a weight distribution of particles, having a particle size of 100 nm or less, of less than 0.3%, a disinfectant exhibiting no environmental toxicity caused by nanoparticles can be obtained. The particle size of titanium dioxide is distributed in accordance with a normal distribution at a range of 100 nm or more and 1 µm or less, and the weight distribution of the particles, having a particle size of 100 nm or less, is less than 0.3%, that is, the disinfectant according to the present aspect does not substantially contain nanoparticles. Therefore, the disinfectant poses no problems with biocompatibility due to nanoparticles, in particular exhibiting no cytotoxicity, and in a similar manner, poses no problems with skin irritation, skin sensitization, and the like.

Silver ions, which are adsorbed onto the titanium dioxide particles having low photocatalytic activity, exert an antimicrobial effect regardless of the presence or absence of light, and also have antiviral properties, anti-allergenicity, bactericidal properties, fungus resistance, and odorant resistance. Moreover, the titanium dioxide particles used in the disinfectant according to the present aspect have photocatalytic activity although at a low level. Therefore, the titanium dioxide particles can favorably cause decomposition of remnants of virus, bacteria, mold, and the like, allergens, odorants, and dirt in cooperation with the action of the silver ions, which are adsorbed onto the titanium dioxide particles. Accordingly, the disinfectant according to the present aspect has at least any one of the following favorable properties, including antiviral properties, anti-allergenicity, bactericidal properties, fungus resistance, and odorant resistance, over an extended period of time regardless of the presence or absence of light.

Regarding silver ions that are adsorbed on titanium dioxide used for an antimicrobial fibrous material according to one aspect of the present invention, they are, for most part, not eluted into water. The amount of eluted silver ions is about several ppb. In particular, when the silver ions are fixed on fibers by the resin binder, the amount of eluted silver ions is equal to or less than several ppb (specifically, about 1 ppb) even after immersion in water for 10 days. Since the silver ions are strongly adsorbed and fixed at a high concentration on the surface of titanium dioxide, the silver ions are not eluted again. Therefore, the disinfectant according to the present aspect has high-performance bactericidal properties that exert both a bactericidal function from the silver ions in a solid state that are adsorbed on the surface, and a bactericidal function from titanium dioxide as the photocatalyst. Accordingly, remnants of virus, bacteria, mold, and the like, allergens, odorants, and dirt are mainly decomposed. The disinfectant according to one aspect of the present invention has at least any one of the following properties, including antiviral properties, anti-allergenicity, bactericidal properties, fungus resistance, and odorant resistance, over an extended period of time since the silver ions are not eluted for the most part.

For example, the silver ions are adsorbed to titanium dioxide at high density in a silver ion solution at a high concentration, for example, about 7.5 to 30 ppm, although the concentration is not particularly limited. For example, when the titanium dioxide powder is added to the silver ion water of 30 ppm, the silver ion concentration in the silver ion water decreases to about several ppb. After that, the titanium dioxide was removed from the silver ion water and dried, and put into water again. Then, the silver ion concentration of the water was as low as several ppb, demonstrating that the silver ions were not eluted again. Thus, it was found that titanium dioxide adsorbs silver ions by an electronic function and continues to retain silver ions for a long period of time so as not to be eluted into the liquid again. In the conventional disinfectant, silver ions were present in a liquid state. However, in the disinfectant according to the present aspect, the silver ions were adsorbed on titanium dioxide to form a solid disinfectant. The solid disinfectant is anti-infective because it can persistently block the transmission of bacteria by contact.

Using the property of the titanium dioxide to adsorb silver ions, titanium dioxide having adsorbed silver ions is used as a disinfectant. The resulting titanium dioxide can be attached to, for example, a fibrous material or a fibrous product by an aqueous resin binder to which a thermosetting crosslinking agent is applied. Since the silver ions are adsorbed and held at high density on the surface of the titanium dioxide, the amount of the silver ions that are eluted again is at a level of several PPB even when the silver ions are processed to be retained on fibers. With this property, the product is a highly functional antimicrobial with persistence. Since the silver ions continue to be adsorbed and retained by the titanium dioxide, the fibrous material or the fibrous product to which the titanium dioxide is attached can maintain the antimicrobial effect over an extended period of time even in a place where light is not present, and has biocompatibility. As the thermosetting crosslinking agent of the aqueous resin binder, a biocompatible crosslinking agent, for example, a polycarbodiimide-based crosslinking agent can be used.

As described above, when the photocatalyst is used for adsorption of silver ions, the bactericidal effect by silver ions can be further utilized in addition to the bactericidal effect by the catalytic activity of the photocatalyst itself, and the desired bactericidal effect can be maintained over an extended period of time even in a place where light is not present. However, ceramics such as alumina, which have been conventionally used, do not have a function of adsorbing silver ions. The present inventors have found that titanium dioxide, for example, titanium dioxide having low catalytic activity used for pigments, adsorbs silver ions and stably retains the silver ions over an extended period of time through analysis of various photocatalysts, leading to, in a disinfectant according to one aspect of the present invention, adsorption of silver by titanium dioxide having low catalytic activity. Although there are various photocatalysts known in the technical field, the present invention has focused on the silver ion adsorption function of titanium dioxide, which is an excellent feature that other silver ion-based antimicrobials do not possess.

In conventional art, hydroxyapatite (HAp) particles have been used as an adsorbent together with a photocatalyst. The antimicrobial fibrous material according one aspect of the present invention, however, does not need to adopt an adsorbent such as hydroxyapatite. However, in the present embodiment, hydroxyapatite may be added to the antimicrobial material. As such, hydroxyapatite is not necessarily an essential component and may be excluded. However, since hydroxyapatite is a well-known adsorbent for various components, it is expected that the use of hydroxyapatite increases the antibacterial activity and the reduction rate of bacteria.

Conventionally, it has been known that nanosilver has a bactericidal effect, but the negative impact of nanosilver on the environment has become a problem. The antimicrobial fibrous material according to one aspect of the present invention, which does not use nanosilver, has no problem of environmental toxicity. The disinfectant according to the present aspect can reduce the amount of silver used as compared with the case of using silver particles, and does not need to pulverize the silver particles. Furthermore, there is no problem of environmental load due to nanosilver, and thus, the disinfectant according to the present aspect has advantages in terms of not only cost but also safety aspect. The antimicrobial fibrous material according one aspect of the present invention is configured so that silver ion water is prepared inexpensively, and that silver ions are adsorbed on titanium dioxide, thereby achieving both safety and economic efficiency.

In addition, in the disinfectant according one aspect of the present invention, the photocatalytic activity of the titanium dioxide particles is smaller than that of titanium dioxide having a normal photocatalytic activity can be used. In this case, even in a place where light is present, the fiber as a substrate is not adversely affected while maintaining at least any one of the following properties, including antiviral properties, anti-allergenicity, bactericidal properties, fungus resistance, and odorant resistance. Thus, it is possible to keep the life of the fibrous material as long as appropriate.

Furthermore, the disinfectant according to one aspect of the present invention is configured such that the titanium dioxide adsorbs the silver ions, and the silver ions are thus not eluted again. Since the disinfectant does not have silver particles that newly generate silver ions, unnecessary silver ions are not released to the surrounding environment, so that there is no negative impact on the environment. Although silver ions of 100 ppb or lower are also allowed to be incorporated in drinking water, excessive silver ions may have a negative impact on the environment. In the disinfectant according to the present aspect, since the silver ions are adsorbed on the titanium dioxide and are not eluted again, the disinfectant persistently has an anti-infective, but silver ions do not excessively affect the environment.

In the disinfectant according to one aspect of the present invention, the aqueous resin binder to which the thermosetting crosslinking agent is applied is used. As this crosslinking agent, a biocompatible crosslinking agent, for example, a polycarbodiimide-based crosslinking agent can be used. For example, the aqueous resin binder to which the thermosetting crosslinking agent such as a polycarbodiimide-based crosslinking agent is applied exhibits excellent biocompatibility and has no cytotoxicity. As a binder for attachment of titanium dioxide to fibers, an aqueous resin binder having high safety is used. When an aqueous urethane resin binder is used as the aqueous resin binder for the disinfectant according to one aspect of the present invention, the resin binder can be used for chemical fibers, and the titanium dioxide can be stably held on the fibers for an extended period of time.

A conventional aqueous crosslinking agent has a problem that a resin emulsion is unlikely to be cured. For example, a high temperature condition is required, the curing speed is too high, and the pot life is short. Thus, stably and uniformly attaching the titanium dioxide to a resin material is difficult. An isocyanate-based crosslinking agent can be used to cure the resin emulsion at normal temperature. However, it was found that the isocyanate-based crosslinking agent has high cytotoxicity. For the disinfectant according to one aspect of the present invention, for example, a polycarbodiimide-based crosslinking agent is used as a crosslinking agent that acts as a crosslinking agent for an aqueous resin and also as a thermosetting crosslinking agent, to solve the problem with cytotoxicity and achieve a property of easily curing the resin emulsion. A safe polycarbodiimide-based crosslinking agent is highly safe, can be adapted to VOC regulation, and can have a reduced negative impact on the environment. A crosslinking agent for a carboxy group-containing aqueous resin is suitable for crosslinking of an aqueous urethane resin (polyurethane dispersion, PUD) that is the carboxy group-containing aqueous resin. The aqueous resin binder may not be limited to a urethane resin, and for example, the aqueous resin binder may be another aqueous resin such as an acrylic resin or a polyester resin.

For example, "CARBODILITE crosslinking agent V-02, V-02-L2, SV-02, V-04, V-10, E-02, or E-05 for aqueous resin" available from Nisshinbo Chemical Inc., can be used. The CARBODILITE crosslinking agent for an aqueous resin is negative for mutagenicity (Ames test), has an LD50 (using rats as experimental animals, an amount that is estimated to kill a half of the experimental animals by oral or transdermal administration) of 2,000 mg/kg or more, and is free from volatile organic compound (VOC). The CARBODILITE crosslinking agent has excellent low-temperature reactivity during curing of the aqueous urethane resin binder although it is thermosetting. Since the CARBODILITE crosslinking agent has a long pot life, titanium dioxide is easily attached to the fibers, and can improve durability, chemical resistance, and adherence.

As a binder for countermeasures against cytotoxicity, a urethane emulsion which is an aqueous urethane resin binder and a thermosetting polycarbodiimide-based crosslinking agent were used, and it was confirmed that there was no cytotoxicity as a result of using a binder without a preservative. On the other hand, in the comparative example which utilizes "U-29K" which is a generally distributed urethane resin binder manufactured by DIC Corporation, cytotoxicity presumed to be caused by, for example, a crosslinking agent was confirmed. For example, it has been confirmed that a conventionally used isocyanate-based crosslinking agent that can cure a binder at room temperature has high cytotoxicity.

In the disinfectant according to a second aspect of the present invention, at least a part of the silver ions may be present in at least one of states including silver oxide, silver hydroxide, and elemental silver.

When at least one metal ion selected from gold, silver, platinum and copper is adsorbed on the surface of the titanium dioxide particles in the solution and then dried, part of the adsorbed metal ions spontaneously change into oxides via hydroxides (hydrates of oxides) as the moisture is removed. Furthermore, in particular, part of the metal ions are photolyzed by ambient light to become corresponding elemental metal. The silver ions having been adsorbed on the titanium dioxide in the state of silver oxide, silver hydroxide or elemental silver are ionized by ambient humidity to generate silver ions again. Therefore, it is possible to provide a disinfectant capable of maintaining a bactericidal effect over an extended period of time even in a place where light is not present, capable of reducing the production cost, and having biocompatibility, as well as an anti-infective fibrous material, an anti-infective fibrous product, a method for producing the same, and an apparatus for producing the same. In addition, it is possible to maintain at least any one of the following favorable properties, including antiviral properties, anti-allergenicity, bactericidal properties, fungus resistance, and odorant resistance regardless of the presence or absence of light. Furthermore, even if at least a part of the silver ions adsorbed on the titanium dioxide particles is in at least one state of silver oxide, silver hydroxide, and elemental silver, the state of silver ions adsorbed on the titanium dioxide particles is maintained.

An anti-infective fibrous material according to a third aspect of the present invention is characterized in that the disinfectant according to the first or second aspect is applied to a fibrous material formed from a chemical fiber, so that the anti-infective fibrous material has a persistent antimicrobial effect in which transmission of bacteria on the fiber can be persistently blocked. Herein, the persistent antimicrobial effect means that a bactericidal effect is maintained, for example, even when the anti-infective fibrous material has been washed for 100 washing cycles or more. As shown in Experimental Examples below, the anti-infective fibrous material according to the present aspect retains the bactericidal effect, for example, even when the number of washing cycles is 300. Therefore, a retreatment for adding the disinfectant to the fibrous material again is not required. From the viewpoint of cytotoxicity, chemical fibers are used as the fibrous material so as to be applicable to the field of medical textiles. Natural fibers do not necessarily achieve safety from the viewpoint of cytotoxicity. For example, it is known that cottonseeds contain a toxic substance such as gossypol. In the field of medical textiles, natural fibers such as cotton have a problem with cytotoxicity. The fibrous material is often treated with various chemicals depending on flexibility, processability, and other purposes of use, and thus the fibrous material needs to be sufficiently washed in advance. For example, for medical gauze formed from cotton, a pretreatment for solving the problem with cytotoxicity is required and increases the cost.

In the anti-infective fibrous material according to the third aspect of the present invention, the chemical fiber such as a nylon fiber, an aramid fiber, a vinylon fiber, a polyvinylidene chloride-based fiber, a polyvinyl chloride-based fiber, a polyester-based fiber, a polyacrylonitrile-based fiber, an acryl-based fiber, a polyethylene-based fiber, a polypropylene-based fiber, a polyurethane-based fiber, a polychlarl fiber, and a polylactic acid fiber are used as the fibrous material. The aqueous resin binder to which a polycarbodiimide-based crosslinking agent is applied also has high functionality for adhesion of titanium dioxide to the chemical fiber. Use of a polyester fiber as an example of the chemical fiber can overcome the cytotoxicity problems associated with fibrous materials (there is an experimental example of a product with the trade name "Tetoron"). For example, a polyester (trade name "Tetoron") was found to have no cytotoxicity.

In the third aspect of the present invention, the fibrous material is specified as an anti-infective fibrous material. However, there is no precedent for an anti-infective fibrous material having an anti-infective property, and there is almost no precedent in which an official approval at a national level is given in countries around the world. The criteria of the bactericidal effect are stringent, and a persistent bactericidal effect of 99.99% is required. In the anti-infective fibrous material or anti-infective fibrous product to which the disinfectant according to the present aspect is applied, transmission of bacteria by contact can be blocked, a persistent bactericidal effect can be achieved, and a bactericidal effect can be maintained even after washing.

In order to solve the problem of resistant bacteria, a bactericidal function of 99.99% that is persistence for a long period of term is required. Conventionally, an immediately acting disinfectant has been present, but has had difficulty exerting a persistent effect. However, since the disinfectant according to the present aspect is persistence and maintains the bactericidal effect over an extended period of time, the disinfectant is extremely useful as a countermeasure to resistant bacteria. On the other hand, a fibrous material and a fibrous product having no cytotoxicity are required. For the anti-infective fibrous material and the anti-infective fibrous product according to the present aspect, the chemical fiber, polyester for example, are used to achieve the bactericidal effect and avoid the problem with cytotoxicity. Thus, the anti-infective fibrous material and the anti-infective fibrous product that have an anti-infective property are achieved.

According to the bactericidal function of 99.99% (hereinafter may referred to as "4log") that is highly persistent, the bactericidal effect can be maintained over an extended period of time, so that resistant bacteria are unlikely to be generated. In addition, the anti-infective fibrous material according to the present aspect is durable for 300 washing cycles, and maintains a bactericidal performance of 99.99%. These properties satisfy the bactericidal performance of 99.99% that is the standard of U.S. FDA. Since a fibrous product is generally discarded after washing about 300 times, after one processing operation adding the disinfectant, a re-processing operation for adding the disinfectant is not required for the anti-infective fibrous material according to the present aspect in which durability for 300 washing cycles and a maintained bactericidal performance of 99.99% are achieved. When bacteria are in contact with the anti-infective fibrous material according to the present aspect for a contact time of about 18 to 24 hours, a bactericidal effect of 99.99% is achieved, and transmission of bacterial infection by contact can be blocked. In the natural environment, exerting the bactericidal effect on bacteria over an extended period of time is important. The anti-infective fibrous material according to the present aspect has excellent antimicrobial properties in that the proliferation of target bacteria is suppressed in a soiled environment, for example, an environment where unwanted bacteria are present.

A bactericidal fibrous product according to a fourth aspect of the present invention is characterized by using the anti-infective fibrous material according to the third aspect. An anti-infective fibrous product according to a fifth aspect of the present invention is characterized in that the disinfectant according to the first or second aspect is attached to a fibrous product formed from a chemical fiber.

According to the fibrous product to which the disinfectant according to the present aspect is applied, it is possible to provide an antimicrobial fibrous material capable of maintaining an antimicrobial effect over an extended period of time even in a place where light is not present, capable of reducing a cost, and exhibiting high biocompatibility without adverse effects of the antimicrobial material against fibrous materials. In addition to the antimicrobial effect, the antimicrobial fibrous material according to the above-described aspect has at least any one of the following favorable properties, including antiviral properties, anti-allergenicity, bactericidal properties, fungus resistance, and odorant resistance, over an extended period of time regardless of the presence or absence of light. In addition, since fibrous materials and fibrous products are required to be extremely useful as a countermeasure to resistant bacteria and have no cytotoxicity in order to maintain the bactericidal effect over an extended period of time, the anti-infective fibrous product according to the present aspect adopts a chemical fiber, polyester for example. In addition to the bactericidal effect, the anti-infective fibrous product avoids the problem of cytotoxicity. Thus, the present invention has achieved the anti-infective fibrous product having anti-infective properties.

A method for producing a disinfectant according to a sixth aspect of the present invention is characterized by including a silver ion solution-preparation step of preparing a solution containing silver ions by electrolyzing silver without using nanosilver having a particle size of less than 100 nm; a step of causing titanium dioxide to adsorb the silver ions in the solution, the titanium dioxide having a particle size of 100 nm or more and 1 µm or less and a weight distribution of particles, having a particle size of 100 nm or less, of less than 0.3%; and a step of mixing the titanium dioxide having adsorbed the silver ions and an aqueous resin binder to which a thermosetting crosslinking agent is applied, to prepare a resin emulsion. In the silver ion solution-preparation step, a solution containing a dispersant in the silver ion solution is prepared in order to facilitate dispersion of the titanium dioxide. The silver ions are adsorbed on the titanium dioxide dispersed in the silver ion solution.

With the method for producing a disinfectant according to this aspect, it is possible to produce a disinfectant capable of maintaining a bactericidal effect over an extended period of time even in a place where light is not present, capable of reducing the production cost, and exhibiting high biocompatibility. In addition, since nanosilver having a particle size of less than 100 nm is not used, there is no environmental toxicity due to nanosilver.

Furthermore, in the step of preparing a solution containing silver ions in the production method according to this aspect, for example, a silver metal plate is used as an anode and a platinum metal plate is used as a cathode, and electrolysis is performed for a short time to cause silver ions to exist in distilled water. Accordingly, a solution containing silver ions can be prepared inexpensively and efficiently.

Furthermore, in the step of causing titanium dioxide to adsorb the silver ions in the solution in the production method according to this aspect, it is possible to cause the titanium dioxide to adsorb the silver ions by utilizing the properties of the titanium dioxide that adsorbs and stably retains silver ions over an extended period of time without need to add other additives such as other adsorbents. For example, when titanium dioxide powder is added to silver ion water of 30 ppm, the silver ion concentration in the silver ion water decreases to about several ppb. After that, titanium dioxide was removed from the silver ion water, dried, and put into water again. The silver ion concentration in the water was as low as several ppb, thereby demonstrating that silver ions were not eluted again. Thus, it was found that the titanium dioxide adsorbs the silver ions and continues to retain the silver ions over an extended period of time so that the silver ions were not eluted into the liquid again.

As a specific example of the aqueous resin binder to which the thermosetting crosslinking agent in the production method according to the above aspect is applied, for example, an aqueous urethane resin binder can be used, and as the crosslinking agent, a polycarbodiimide-based crosslinking agent can be applied. The polycarbodiimide-based crosslinking agent is excellent in low-temperature reactivity with a carboxy group, hardens the aqueous urethane resin binder, and tends to uniformly and stably attach the titanium dioxide, having adsorbed the silver ions, to a fibrous material. In such a process, it is important to wash the fibrous material serving as a base fabric so as to wash away toxic substances in advance, to select aqueous resin binders and crosslinking agents which are not cytotoxic, and to use titanium dioxide having adsorbed silver ions as an antibacterial material to adhere to the fibrous material. Chemical fibers can also be selected as the substrate that is not cytotoxic to serve as the fibrous material. The above-described binder for countermeasures against cytotoxicity can also be applied to the chemical fibers.

By using a thermosetting crosslinking agent having excellent low-temperature reactivity, such processes can be performed with a simple apparatus. For example, the aqueous resin binder can be cured at a temperature of about 70°C to 150°C. For example, the following methods can be used:
(1) a method in which a dry air sterilization treatment is performed at 120°C for 4 hours as a sterilization treatment after the antimicrobial is processed to be retained on a fibrous material;
(2) a method in which a substrate is stirred, using a drum-type washing machine as a rotating drum-type processing machine, in a mixed solution in which a crosslinking agent in an aqueous resin binder and titanium dioxide having adsorbed silver ions are mixed in a predetermined softened water, in order to attach the titanium dioxide to the substrate;
(3) a method in which the mixed solution is attached to an original fabric of a fibrous material by a screen printing method via a screen mask having a predetermined pattern;
(4) a method in which the mixed solution is sprayed and then dried to impart bactericidal properties to an original fabric of a fibrous material;
(5) a method in which an original fabric of a fibrous material is immersed in the mixed solution in a predetermined container, dehydrated, and then dried to impart bactericidal properties to the original fabric of the fibrous material; or
(6) a method using a large-scale dyeing-processing machine in a textile mill, and the like.

In the method (1), when a sterilization treatment is performed with an autoclave, the antimicrobial effect may be reduced or eliminated. Therefore, the sterilization treatment conditions need to be appropriately set to, for example, 120°C and 4 hours.

The hardness of softened water used in the mixed solution is preferably 60 or less. In order to ensure a longer treatment time, the hardness of softened water is preferably 40 or less. The hardness of softened water is preferably 30 or less since the mixed solution is less aggregated after the treatment of the mixed solution and drying.

A method for producing an anti-infective fibrous material or an anti-infective fibrous product according to a seventh aspect of the present invention is characterized by including
a step of applying the resin emulsion prepared by the method for producing a disinfectant according to the sixth aspect to a fibrous material formed from a chemical fiber or a fibrous product formed from a chemical fiber with a rotating drum-type processing machine, to attach the titanium dioxide, having adsorbed the silver ions, to the fibrous material formed from the chemical fiber or the fibrous product formed from the chemical fiber so that the titanium dioxide is incorporated into yarn of the fibrous material or the fibrous product.

In the method for producing an anti-infective fibrous material or an anti-infective fibrous product, a specialized production facility, for example, a large-scale facility such as a large-scale dyeing processing machine in a textile mill, and the like, are not required, and for example, a commercially available drum-type washing machine can be used as a rotating drum-type processing machine in production. The fibrous material or the fibrous product that is a target for processing is placed in the drum-type washing machine, and made wet, the prepared resin emulsion is sprayed, so that the disinfectant is adsorbed on the fibrous material or the fibrous product by tumbling with the drum-type washing machine, that is, the disinfectant is attached such that the disinfectant is incorporated into the yarn of the fibrous product formed from the chemical fiber. Finally the fibrous material or the fibrous product is dried by a drying function of the drum-type washing machine. Thus, the disinfectant can be applied to the fibrous material or the fibrous product. An experiment has confirmed that the disinfectant attached to the fibrous material or the fibrous product is held after washing. For example, even after 300 washing cycles, the antimicrobial activity value is maintained. This showed that a bactericidal effect was maintained. Even after 300 washing cycles, the bactericidal effect of 99.99% is maintained. Therefore, one processing operation for adding the disinfectant to the fibrous material or the fibrous product is sufficient for achieving the bactericidal effect, and a re-processing operation such as further addition of the disinfectant is not required in most cases. Due to the re-processing operation not being required, the anti-infective fibrous material or the anti-infective fibrous product according to the present aspect is highly economical, can persistently maintain its effects in promoting user safety against bacteria, and has an effect of reducing the number of washing cycles necessary in response to dirtiness, and thus a synergistic economic effect that has not been achieved conventionally is obtained.

Another processing example using a drum-type washing machine will be described. In this other processing example, the disinfectant is not sprayed, and a mixed solution of the disinfectant with softened water is used. As a rotating drum-type processing machine, for example, a drum-type washing machine used in a laundromat or the like is used. A unit configured to supply and discharge a mixed solution of the disinfectant (resin emulsion) according to the present aspect with predetermined softened water is provided in an internal drum. As the unit configured to supply and discharge the mixed solution, a water supply pipe line for supplying water to the drum and a discharge pipe line for discharging water from the drum that the commercially available drum-type washing machine is equipped with are provided. To these pipe lines, a pipe line for supplying the mixed solution of the disinfectant according to the present aspect with predetermined softened water, and a pipe line for discharging the mixed solution of the used disinfectant from the inside are connected as appropriate, and an electromagnetic valve and a motor pump are provided on each of the pipe lines. Thus, supply and discharge of the mixed solution can be controlled.

In order to perform processing of a fibrous material or a fibrous product after washing or before processing in a clean drying state with the disinfectant according to the present aspect, the fibrous material or the fibrous product before processing is placed in the drum, and a drum 41 is rotated (several times to about 2 or 3 minutes) while a predetermined amount of the mixed solution is supplied, similarly to a case of common laundry washing. The fibrous material or the fibrous product before processing is sufficiently immersed in the mixed solution, so that the disinfectant is attached such that the disinfectant is incorporated into yarn of the fibrous material or the fibrous product.

The mixed solution remaining in the drum is then recovered, and dehydration is performed similarly to the case of common laundry washing. After completion of the dehydration, drying is performed at about 70°C to 150°C by a drying function of the drum-type washing machine or another drying machine. Thus, the disinfectant according to the present aspect can be applied to the fibrous material or the fibrous product.

An apparatus for producing a disinfectant of an eighth aspect of the present invention is characterized by including a silver ion preparation part configured to prepare a solution containing silver ions, a silver ion adsorption part configured to cause titanium dioxide to adsorb the silver ions in the solution, the titanium dioxide having a particle size of 100 nm or more and 1 µm or less and a weight distribution of particles, having a particle size of 100 nm or less, of less than 0.3%, and a resin emulsion preparation part configured to mix the titanium dioxide, having adsorbed the silver ions, with an aqueous resin binder to which a thermosetting crosslinking agent is applied, to prepare a resin emulsion.

According to the apparatus for producing a disinfectant according to the present aspect, a disinfectant capable of maintaining a bactericidal effect over an extended period of time even in a place where light is not present, capable of reducing the production cost, and exhibiting high biocompatibility can be produced.

An apparatus for producing an anti-infective fibrous material or an anti-infective fibrous product of a ninth aspect of the present invention is characterized by including an attachment part configured to apply the resin emulsion prepared with the apparatus according to the eighth aspect to a fibrous material formed from a chemical fiber or a fibrous product formed from a chemical fiber with a rotating drum-type processing machine, to attach the titanium dioxide, having adsorbed the silver ions, to the fibrous material formed from the chemical fiber or the fibrous product formed from the chemical fiber so that the titanium dioxide is incorporated into yarn of the fibrous material or the fibrous product.

According to the apparatus for producing an anti-infective fibrous material or an anti-infective fibrous product, a specialized production facility, for example, a large-scale facility such as a large-scale dyeing processing machine in a textile mill, and the like, are not required, and for example, a commercially available drum-type washing machine can be used as a rotating drum-type processing machine in production. An experiment has confirmed that the disinfectant attached to the fibrous material or the fibrous product is retained after washing.

### Advantageous Effects of Invention

As described above, according to the disinfectant according to one aspect of the present invention, it is possible to provide a disinfectant capable of maintaining a bactericidal effect over an extended period of time even in a place where light is not present, capable of reducing the production cost, and exhibiting high biocompatibility, as well as an anti-infective fibrous material, an anti-infective fibrous product, a method for producing the same, and an apparatus for producing the same. In addition to the antimicrobial effect, they have at least one of the following properties, including antiviral properties, anti-allergenicity, bactericidal properties, fungus resistance, and odorant resistance, and can cause decomposition of remnants of virus, bacteria, mold, and the like, allergens, odorants, and even dirt over an extended period of time.

### Brief Description of Drawings

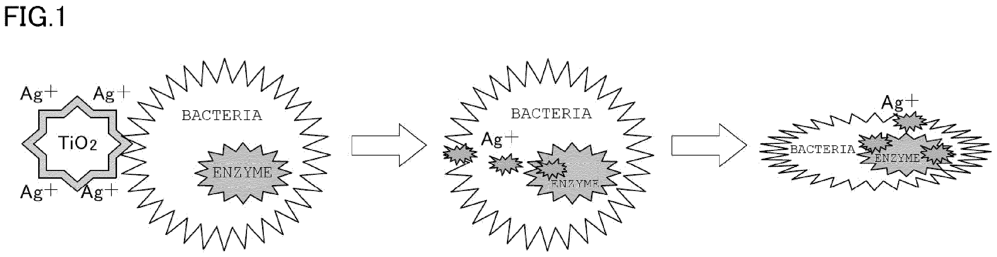

[Fig. 1] Fig. 1 is a view illustrating an antimicrobial function of an antimicrobial material used for an anti-infective fibrous material of an embodiment.
[Fig. 2] Fig. 2 includes photographs of experimental results of biocompatibility of the anti-infective fibrous material of the embodiment.

### Description Of Embodiments

Hereinafter, the disinfectant, the anti-infective fibrous material, the anti-infective fibrous product, the method for producing the same, and the apparatus for producing the same of embodiments according to the present invention will be described in detail with reference to various experimental examples and comparative examples. The following various experimental examples only show examples for embodying the technical idea of the present invention, and are not intended to limit embodiments of the present invention to these experimental examples. The present invention can equally be applied to other embodiments within the scope of the claims.

Due to titanium dioxide on which silver ions are adsorbed, an antimicrobial fibrous material of the embodiment has an antimicrobial effect and at least any one of the following favorable properties, including antiviral properties, anti-allergenicity, bactericidal properties, fungus resistance, and odorant resistance, over an extended period of time regardless of the presence or absence of light. The antimicrobial fibrous material of the embodiment includes a bactericidal fibrous material. In the following description, a term bactericidal may be used in addition to a term antimicrobial. Titanium dioxide, having adsorbed silver ions, has a bactericidal effect and at the same time, has an antimicrobial effect, that is, an effect of suppressing the proliferation of bacteria. The disinfectant of the embodiment has a structure in which highly concentrated silver ions are adsorbed on a surface of titanium oxide, and has a bactericidal effect caused by the silver ions while the titanium dioxide itself has a bactericidal effect of a photocatalyst. Therefore, a high bactericidal function can be persistently exerted.

### [Experimental Example 1] Adsorption of silver ions on titanium dioxide

In silver ion water in which metal silver was electrolyzed in pure water, titanium dioxide having low catalytic activity, for example, anatase type titanium dioxide for a pigment was immersed. Adsorption of the silver ions on the titanium dioxide was confirmed by an experiment. Separately, electrolysis was performed using a silver metal plate as an anode and a platinum metal plate as a cathode for a short time to generate silver ions in distilled water. Silver ion concentration measured values under respective conditions are shown in Table 1. The measurement conditions of silver ion concentration are as follows.
Evaluation device: Plasma mass spectrometer Agilent 7800 manufactured by Agilent Technologies, Inc.
Centrifugal separation condition: 17,000 rpm-2 Hr
Ag ion measured value: average value at N = 3

**[Table 1]**

| No | SAMPLE INFORMATION | Ag ION CONCENTRATION MEASURED VALUE | REMARK |
|---|---|---|---|
| 1 | Ag ION WATER CONCENTRATION AS DISPERSION BASE | 7.5ppm | OBTAINED BY ELECTROLYZING METAL SILVER IN PURE WATER. |
| 2 | 7.5 ppm SILVER ION WATER AND TIO₂ (SLURRY CONCENTRATION: 35%) WERE ALLOWED TO STAND FOR 10 DAYS. | 1.5ppb | |
| 3 | NO. 2 WAS DRIED, DISPERSED IN 40 CC OF PURE WATER. AND ALLOWED TO STAND FOR 5 DAYS. | 1.7ppb | SLURRY CONCENTRATION WAS SET TO 35%. |
| 4 | SILVER-ADSORBED TIO₂ STOCK SOLUTION HAVING SLURRY CONCENTRATION OF 35% WAS ALLOWED TO STAND FOR 15 DAYS. | 15.0ppb | USUAL DISTRIBUTION PRODUCT IN WHICH METAL SILVER POWDER IS USED |
| 5 | NO. 4 WAS CONVERTED INTO COATING MATERIAL AND THEN PROCESSED INTO FIBROUS MATERIAL, AND FIBROUS MATERIAL WAS IMMERSED IN PURE WATER FOR 5 DAYS. | 12.0ppb | FIVE FIBROUS MATERIALS OF 5 cm × 5 cm WERE IMMERSED IN 40 cc OF PURE |
| 6 | 80% OF TIO₂ AND 20% OF HAP (SLURRY CONCENTRATION: 35%) IN NO. 1 WERE ALLOWED TO STAND FOR 10 DAYS. | 0.5ppb | NEW MATERIAL-DESIGNED PRODUCT SPECIFICATION. |
| 7 | NO. 6 WAS CONVERTED INTO COATING MATERIAL AND THEN PROCESSED INTO FIBROUS MATERIAL, AND FIBROUS MATERIAL WAS IMMERSED IN PURE WATER FOR 5 DAYS. | 1.0ppb | FIVE FIBROUS MATERIALS OF 5 cm × 5 cm WERE IMMERSED IN 40 cc OF PURE WATER. |
| 8 | NO. 6 WAS DRIED, DISPERSED IN 40 cc OF PURE WATER, AND ALLOWED TO STAND FOR 5 DAYS. | 0.5ppb | SLURRY CONCENTRATION WAS SET TO 35% |

As shown in No. 1, silver ion water (Ag ion water) having a silver ion concentration of 7.5 ppm was prepared by electrolysis of metal silver in pure water. As shown in No. 2, most of silver ions in the silver ion water obtained by electrolysis was adsorbed on the titanium dioxide (TiO₂), and the silver ion concentration was decreased from 7.5 ppm (No. 1) to 1.5 ppb (No. 2). Even when the titanium dioxide on which silver ions were adsorbed in No. 2 was immersed in pure water, the silver ions were hardly eluted again (see No. 3). As silver-adsorbed TiO₂ of No. 4, an antimicrobial in which silver metal particles were bonded to titanium dioxide available from Shinshu Ceramics Co., Ltd., was used. The adsorption of the silver ions on titanium dioxide was confirmed. Herein, the silver-adsorbed TiO₂ of No. 4 is not particularly limited. For example, the average particle size of the silver metal particles may be about 100 nm to 50 µm, the average particle size of titanium dioxide particles may be about 100 nm to 50 µm, and the average particle size of the hydroxyapatite particles may be about 100 nm to 50 µm.

The silver ions adsorbed on the titanium dioxide in No. 4 were hardly eluted again even after immersion of the titanium dioxide in pure water (see No. 5). As shown in No. 6, 80% of titanium dioxide and 20% of hydroxyapatite (HAP) (slurry concentration: 35%) were immersed in the silver ion water of No. 1. It was found that most of the silver ions was adsorbed on the titanium dioxide or the hydroxyapatite, and the adsorbed silver ions was hardly eluted again by immersion in pure water (Nos. 7 and 8).

The titanium dioxide and the hydroxyapatite on which the silver ions were adsorbed were dried. During drying, in the presence of moisture content, the silver ions adsorbed on the titanium dioxide and the hydroxyapatite were partially converted through silver hydroxide (AgOH or Ag₂O·H₂O) to silver oxide (Ag₂O), and silver hydroxide or silver oxide was further partially photodecomposed into silver atoms in the presence of external light. In a drying state, a part of the silver ions adsorbed on the titanium dioxide is present as silver hydroxide and silver oxide, and another part thereof is present as silver metal that has been originally present and additional silver metal elements although the silver ions cannot be individually visually checked. The silver ions present in each state are returned to forms of silver ions due to some moisture, and these silver ions exert an antimicrobial action with the catalytic activity of the titanium dioxide.

The silver ions were adsorbed on the titanium dioxide by a method for performing standing for a predetermined time. For adsorption for a short time, manual stirring, mechanical stirring, ultrasonic irradiation, bubbling of inert gas, or stirring by a ball mill may be used.

In the present embodiment, the examples in which silver ions are adsorbed on the titanium dioxide or hydroxyapatite as a base member have been shown, but not only silver ions but also gold ions (Au³⁺), platinum ions (Pt²⁺), and copper ions (Cu²⁺) may be adsorbed. Furthermore, the examples show that silver ions are supplied by electrolysis. When silver ions, gold ions, platinum ions, and copper ions are to be adopted, it is possible to supply them by an aqueous solution in which silver nitrate (AgNO₃), gold chloride (AuCl₃), platinum chloride (PtCl₂), copper chloride (CuCl₂), copper nitrate (Cu(NO₃)₂), or the like is dissolved.

In this way, the antimicrobial material of the present embodiment is produced by adsorbing silver ions to the titanium dioxide in silver ion water. The titanium dioxide is designed to have a particle size ranging from 100 nm to 1 µm and a weight distribution of particles, having a particle size of 100 nm or less, of less than 0.3%. An example of the particle size distribution of the titanium dioxide used in the antimicrobial of the present example is shown in Table 2.

**[Table 2]**

| SECTION WIDTH (*µ*m) | | REPRESENTATIVE VALUE (*µ*m) | WEIGHT DISTRIBUTION (%) |
|---|---|---|---|
| 0 | 0.05 | 0.025 | 0 |
| 0.05 | 0.1 | 0.075 | 0.2 |
| 0.1 | 0.15 | 0.125 | 2.94 |
| 0.15 | 0.2 | 0.175 | 12.14 |
| 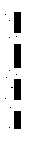 | 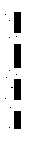 | 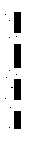 | 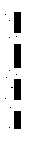 |

In Table 2, the weight distribution of the particles of 100 nm (0. 1 µm) or less, which is the lower limit of the particle size of the titanium dioxide, is 0.2%, so that the titanium dioxide is substantially free of nanoparticles. The weight average diameter is of the order of 300 nm, and the particle size distribution follows the probabilistic distribution and so is within a range of 100 nm to 600 nm. The upper limit of the particle size of the titanium dioxide is not particularly limited. If the particle size is too large, it is not desirable from the viewpoint of adhesion to the fibrous material. Therefore, the upper limit of the particle size may be set to 1 µm, and more desirably, the upper limit of the particle size may be set to about 600 nm. When the particle size of the titanium dioxide is 100 nm or more, it is advantageous that the titanium dioxide is easily dispersed in an aqueous resin emulsion which is an aqueous resin binder to which a thermosetting crosslinking agent is applied.

The antimicrobial material used in the disinfectant of the present embodiment is white, and when it is attached to the fibrous material, there is no discoloration of the fiber due to aging, and the stability of the quality is excellent. Since the titanium dioxide adsorbs the electrolyzed silver ions, the titanium dioxide, which does not contain silver metal particles, does not cause blackening due to silver metal powder.

### [Experimental Example 2] Biocompatibility of binder

In Experimental Example 2, the biocompatibility of a binder of a disinfectant used for the anti-infective fibrous material of the embodiment was confirmed. In particular, non-cytotoxicity was confirmed. For the binder of the embodiment, an aqueous resin binder that is a binder for a biocompatible product and to which a thermosetting crosslinking agent is applied is used. As the aqueous resin binder, for example, a urethane resin binder can be used, but the aqueous resin binder is not particularly limited. For example, as a crosslinking agent that may be an acrylic resin binder or a polyester resin binder, an aqueous biocompatible thermosetting crosslinking agent, such as a polycarbodiimide-based crosslinking agent for example, is used. Because the binder is a biocompatible product, a preservative and the like are not contained. The binder of the disinfectant used for the anti-infective fibrous material of the embodiment exhibits biocompatibility as shown in Table 3. In this Experimental Example, "EVAFANOL HA-207" was used as the urethane resin binder, and "NK ASSIST CI-02" was used as the thermosetting polycarbodiimide-based crosslinking agent.

In the embodiment, the biocompatibility was evaluated in accordance with criteria for evaluation of biocompatibility based on ISO 10993-5. Five grades as the criteria for evaluation are as follows.
Grade 0: Reactivity = None (Granules dispersed in cells are observed. Cytolysis is not observed.)
Grade 1: Reactivity = Slight (The proportion of cells that are spherical and have reduced adhesiveness and in which intracellular granules are not found is 20% or less of the total. Cytolysis is rarely observed.)
Grade 2: Reactivity = Mild (The proportion of spherical cells in which intracellular granules are not found is more than 20% and 50% or less of the total. Cytolysis and intercellular gaps are not observed across a wide range.)
Grade 3: Reactivity = Moderate (The proportion of spherical cells or lysed cells is more than 50% and less than 70% of the total.)
Grade 4: Reactivity = Severe (Almost all cells are lysed.)

**[Table 3]**

| SAMPLE | Grade(N=1) | Reactivity |
|---|---|---|
| **DIRECT EXPOSURE** | | |
| ① **SPECIMEN** | 0 | None |
| ② **BLANK CONTROL** | 0 | None |

| **INDIRECT EXPOSURE** | | |
|---|---|---|
| ③ **SPECIMEN** | 0 | None |
| ④ **BLANK CONTROL** | 0 | None |
| ⑤ **NEGATIVE CONTROL** | 0 | None |
| ⑥ **POSITIVE CONTROL** | 4 | Severe |

### [Comparative Example 2-1] Cytotoxicity of Binder of comparative example

For U-29K binder available from DIC Corporation, which is a usually distributed binder, cytotoxicity was recognized, and non-biocompatibility was seen as shown in Table 4. As a normal-temperature curable crosslinking agent (curing agent), U-29K binder contains an isocyanate-based normal-temperature curable crosslinking agent.

**[Table 4]**

| SAMPLE | Grade(N=1) | Reactivity |
|---|---|---|
| **DIRECT EXPOSURE** | | |
| ① **SPECIMEN** | 4 | Severe |
| ② **BLANK CONTROL** | 0 | None |

| **INDIRECT EXPOSURE** | | |
|---|---|---|
| ③ **SPECIMEN** | 4 | Severe |
| ④ **BLANK CONTROL** | 0 | None |
| ⑤ **NEGATIVE CONTROL** | 0 | None |
| ⑥ **POSITIVE CONTROL** | 4 | Severe |

### [Experimental Example 4] Washing strength

In Experimental Example 4, the washing resistance of the anti-infective fibrous material of the embodiment was confirmed. A washing condition of 100% of polyester made in Japan (Tetoron) was based on a washing method (standard washing method) for SEK mark textile product of Japan Textile Evaluation Technology Council. This washing method includes the following steps (1) to (5) in accordance with a washing method 103 of JIS L0217.
(1) A "JAFET standard formulated detergent" is added at a ratio of 40 mL to 30 L of water at a liquid temperature 40°C, and a washing liquid is put in a washing water tank up to a top water line thereof.
(2) To the washing liquid, a sample and if necessary, a load cloth are added at a bath ratio of 1:30. An operation is started.
(3) After the operation is performed for 5 minutes, the operation is stopped, and the sample and the load cloth are dehydrated with a dehydrator. The washing liquid is changed with new water of normal temperature, and rinsing is performed at the same bath ratio for 2 minutes.
(4) After completion of the 2-minute rinsing, the operation is stopped, the sample and the load cloth are dehydrated, and rinsing is performed again for 2 minutes, followed by dehydration.
(5) The steps (1) to (4) are repeated predetermined times. After repeated washing, drying is performed at 80°C or lower.

Fiber processing conditions shall be (a) to (d) below.
(a) Processed base fabric: 100% polyester made in Japan (Tetoron).
(b) Disinfectant: silver ions were adsorbed onto titanium dioxide (KA-10C manufactured by Titan Kogyo, Ltd.) in electrolyzed silver ion water.
(c) Resin binder: aqueous urethane resin emulsion, using a polycarbodiimide-based crosslinking agent with no preservative.
(d) Fiber processing conditions: fixed amount is 4 g/m² as solid content and drying condition is 150°C for 1 minute.

Antimicrobial activity values according to the number of washing cycles of the anti-infective fibrous material of the embodiment against Staphylococcus aureus are shown in Table 5. The antimicrobial effect of washing against Staphylococcus aureus was evaluated in accordance with criteria. The result shows that the anti-infective fibrous material of the embodiment is sufficiently durable for 300 washing cycles or more. While the number of Staphylococcus aureus in a control sample is largely increased by cultivation, the number of Staphylococcus aureus in the anti-infective fibrous material of the embodiment is decreased to 0.1% or less after cultivation. That is, the anti-infective fibrous material has a bactericidal effect of 99.99% (4log). The used strain was Staphylococcus aureus NBRC12732. In this Experimental Example (Tables 5 and 6), a test bacteria suspension in which a surfactant (Tween 80) was added was used. After dry heat sterilization at 120°C for 4 hours, a specimen was tested.

**[Table 5]**

| 1. **STAPHYLOCOCCUS** | | | | | |
|---|---|---|---|---|---|
| No. | **SAMPLE** | | COMMON LOGARITHM OF VIABLE CELL COUNT (DIFFERENCE BETWEEN MAXIMUM AND MINIMUM) | | ANTIMICROBIAL ACTIVITY VALUE |
| | | | IMMEDIATELY AFTER | 18 HOURS AFTER CULTIVATION | |
| ① | **ANTI-INFECTIVE FIBROUS PRODUCT (BEFORE WHITE DYEING)** | AFTER 100 WASHING CYCLES | 4.47(0.1) | 1.30(0.0) | 5.8 |
| | | AFTER 200 WASHING CYCLES | 4.51(0.1) | 1.30(0.0) | 5.8 |
| | | AFTER 300 WASHING CYCLES | 4.49(0.0) | 1.30(0.0) | 5.8 |
| ② | **ANTI-INFECTIVE FIBROUS PRODUCT (AFTER WHITE DYEING)** | AFTER 100 WASHING CYCLES | 4.51(0.1) | 1.30(0.0) | 5.8 |
| | | AFTER 200 WASHING CYCLES | 4.48(0.2) | 1.30(0.0) | 5.8 |
| | | AFTER 300 WASHING CYCLES | 4.51(0.0) | 1.30(0.0) | 5.8 |
| CONTROL SAMPLE (STANDARD CLOTH, 100% COTTON. WHITE CLOTH) | | | 4.51(0.0) | 7.12(0.0) | PROLIFERATION VALUE F:2.6 |

Values for antimicrobial activity against Escherichia coli according to the number of washing cycles performed on the anti-infective fibrous material of the embodiment are shown in Table 6. The antimicrobial effect of washing against Escherichia coli was evaluated in accordance with criteria. The result shows that the anti-infective fibrous material of the embodiment is sufficiently durable for 300 washing cycles or more. While the number of Escherichia coli in a control sample is largely increased by cultivation, the number of Escherichia coli in the anti-infective fibrous material of the embodiment is decreased to 0.1% or less after cultivation. That is, the anti-infective fibrous material has a bactericidal effect of 99.99% (4log). The used strain was Escherichia coli NBRC3301.

**[Table 6]**

| **2. ESCHERICHIA COLI** | | | | | |
|---|---|---|---|---|---|
| No. | **SAMPLE** | | COMMON LOGARITHM OF VIABLE CELL COUNT (DIFFERENCE BETWEEN MAXIMUM AND MINIMUM) | | ANTIMICROBIAL ACTIVITY VALUE |
| | | | IMMEDIATELY AFTER | 18 HOURS AFTER CULTIVATION | |
| ① | **ANTI-INFECTIVE FIBROUS PRODUCT (BEFORE WHITE DYEING)** | AFTER 100 WASHING CYCLES | 4.34(0.1) | 1.30(0.0) | 6.3 |
| | | AFTER 200 WASHING CYCLES | 4.30(0.1) | 1.30(0.0) | 6.3 |
| | | AFTER 300 WASHING CYCLES | 4.31(0.2) | 1.30(0.0) | 6.3 |
| ② | **ANTI-INFECTIVE FIBROUS PRODUCT (AFTER WHITE DYEING)** | AFTER 100 WASHING CYCLES | 4.26(0.2) | 1.30(0.0) | 6.3 |
| | | AFTER 200 WASHING CYCLES | 4.29(0.2) | 1.30(0.0) | 6.3 |
| | | AFTER 300 WASHING CYCLES | 4.37(0.2) | 1.30(0.0) | 6.3 |
| CONTROL SAMPLE (STANDARD CLOTH. 100% COTTON, WHITE CLOTH) | | | 4.49(0.1) | 7.63(0.1) | PROLIFERATION VALUE F:3.1 |

### [Experimental Example 5] Biocompatibility of fibrous material

In Experimental Example 5, the biocompatibility of a fibrous material used for the anti-infective fibrous material of the embodiment was confirmed. In the field of medical textiles, more stringent biocompatibility than during usual use is required, and the criterion of cytotoxicity is also stringent. The biocompatibility of 100% polyester made in Japan (Tetoron) in Experimental Example 5 is shown with Comparative Examples of various types of fibrous materials. As the 100% polyester made in Japan (Tetoron), a commercially available bed sheet (after washing) was used.

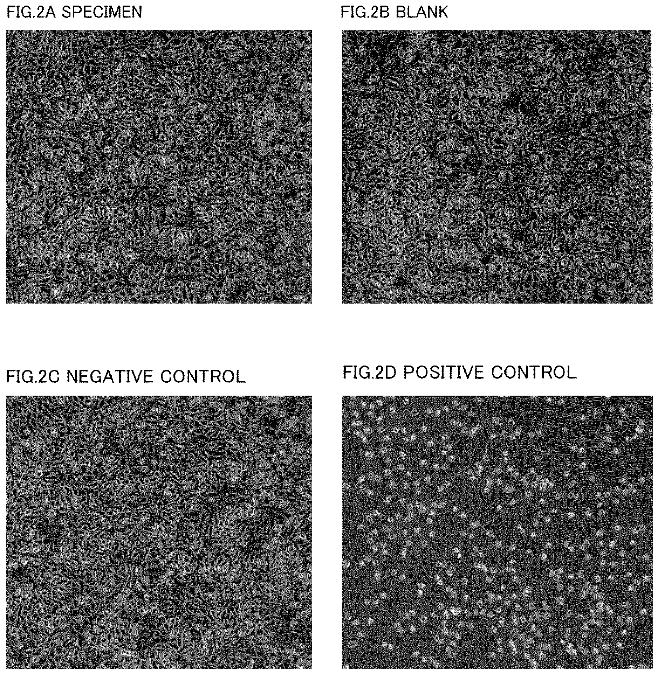

In the anti-infective fibrous material of the embodiment, chemical fibers are desirably used as the fibrous material so as to be applicable to the field of medical textiles from the viewpoint of biocompatibility. Natural fibers do not necessarily achieve safety from the viewpoint of biocompatibility. Table 7 shows results of cytotoxicity tests of the 100% polyester made in Japan (Tetoron). Fig. 2 includes photographs of experimental results of biocompatibility of the anti-infective fibrous material of the embodiment.

As shown in Table 7 and Fig. 2, for example, non-cytotoxicity of the 100% polyester made in Japan (Tetoron) shown in this Experimental Example was confirmed. The results show that the fibrous material of the 100% polyester made in Japan in this Experimental Example satisfies an acceptable level of biocompatibility in accordance with the criteria in the field of medical textiles.

**[Table 7]**

| NUMBER IN DRAWING | SAMPLE | Grade (N=1) | Reactivity |
|---|---|---|---|
| FIG. 2A | SPECIMEN | 0 | None |
| FIG. 2B | BLANK CONTROL | 0 | None |
| FIG. 2C | NEGATIVE CONTROL | 0 | None |
| FIG. 2D | POSITIVE CONTROL | 4 | Severe |

In contrast, the cytotoxicity of the fibrous material of each of [Comparative Example 5-1] to [Comparative Example 5-7] was recognized, and thus the biocompatibility of the fibrous material did not reach the acceptable level in accordance with the criteria in the field of medical textiles.

### [Comparative Example 5-1] "Unbleached muslin No. 3"

Table 8 shows the evaluation results of an unwashed product of unbleached muslin No. 3 made of cotton, which has been conventionally used as a standard base fabric for evaluation. Since the unwashed standard base fabric made of 100% cotton for evaluation had cytotoxicity, the biocompatibility did not reach the acceptance level in accordance with the criteria in the field of medical textiles.

**[Table 8]**

| TEST LIQUID | Grade(N=1) | Reactivity |
|---|---|---|
| SPECIMEN | 4 | Severe |
| BLANK CONTROL | 0 | None |
| NEGATIVE CONTROL | 0 | None |
| POSITIVE CONTROL | 4 | Severe |

### [Comparative Example 5-2] Bed sheet made of 100% cotton manufactured by T company (before washing)

Evaluation results of an unwashed product of bed sheet made of 100% cotton manufactured by T company are shown in Table 9. Since the unwashed bed sheet made of 100% cotton manufactured by T company had cytotoxicity, the biocompatibility did not reach the acceptance level in accordance with the criteria in the field of medical textiles.

**[Table 9]**

| SAMPLE | Grade(N=3) | | | Reactivity |
|---|---|---|---|---|
| SPECIMEN | 4 | 4 | 4 | Severe |
| BLANK CONTROL | 0 | 0 | 0 | None |
| NEGATIVE CONTROL | 0 | 0 | 0 | None |
| POSITIVE CONTROL | 4 | 4 | 4 | Severe |

### [Comparative Example 5-3] Bed sheet made of 100% cotton manufactured by T company (after washing)

Evaluation results of bed sheet made of 100% cotton manufactured by T company after washing are shown in Table 10. Since the bed sheet made of 100% cotton manufactured by T company after washing also had cytotoxicity, the biocompatibility did not reach the acceptance level in accordance with the criteria in the field of medical textiles.

**[Table 10]**

| SAMPLE | Grade(N=3) | | | Reactivity |
|---|---|---|---|---|
| SPECIMEN | 4 | 4 | 4 | Severe |
| BLANK CONTROL | 0 | 0 | 0 | None |
| NEGATIVE CONTROL | 0 | 0 | 0 | None |
| POSITIVE CONTROL | 4 | 4 | 4 | Severe |

### [Comparative Example 5-4] Blended fabric of polyester and cotton (made in U.S.)"

As a result of evaluating blended fabric of polyester and cotton, which are fibrous materials commercially available in the United States, the biocompatibility did not reach the acceptance level in accordance with the criteria in the field of medical textiles, because of the cytotoxicity as shown in Table 11.

**[Table 11]**

| SAMPLE | Grade(N=3) | | | Reactivity |
|---|---|---|---|---|
| SPECIMEN | 4 | 4 | 4 | Severe |
| BLANK CONTROL | 0 | 0 | 0 | None |
| NEGATIVE CONTROL | 0 | 0 | 0 | None |
| POSITIVE CONTROL | 4 | 4 | 4 | Severe |

### [Comparative Example 5-5] Commercially available bed sheet of 50% polyester + 50% cotton (after washing)

In Experimental Example 5, it was confirmed that the 100% polyester fibrous material made in Japan (Tetoron) had no cytotoxicity. In Comparative Example 5-5, the cytotoxicity of commercially available bed sheet of 50% polyester + 50% cotton (after washing) was evaluated. As a result, as shown in Table 12, the commercially available bed sheet of 50% polyester + 50% cotton (after washing) of Comparative Examples 5-5 had cytotoxicity, and therefore, the biocompatibility thereof did not reach the acceptance level in accordance with the criteria in the field of medical textiles.

**[Table 12]**

| SAMPLE | Grade(N=3) | | | Reactivity |
|---|---|---|---|---|
| SPECIMEN | 4 | 4 | 4 | Severe |
| BLANK CONTROL | 0 | 0 | 0 | None |
| NEGATIVE CONTROL | 0 | 0 | 0 | None |
| POSITIVE CONTROL | 4 | 4 | 4 | Severe |

### [Comparative Example 5-6] Material for bed sheet made of 100% cotton manufactured by T company (boiling treatment with surfactant)

Table 13 shows the results of evaluating the cytotoxicity of a material for bed sheet made of 100% cotton manufactured by T company which was washed with polysorbate-80 and sodium carbonate. The biocompatibility did not reach the acceptance level in accordance with the criteria in the field of medical textiles because of cytotoxicity confirmed after washing with the designated formulation.

**[Table 13]**

| SAMPLE | Grade(N=3) | | | Reactivity |
|---|---|---|---|---|
| SPECIMEN | 4 | 4 | 4 | Severe |
| BLANK CONTROL | 0 | 0 | 0 | None |
| NEGATIVE CONTROL | 0 | 0 | 0 | None |
| POSITIVE CONTROL | 4 | 4 | 4 | Severe |

### [Comparative Example 5-7] Evaluation standard material made of 100% cotton available from evaluation organization (boiling treatment with surfactant)

Table 14 shows the results of evaluating the cytotoxicity of an evaluation standard material made of 100% cotton available from evaluation organization which was washed with polysorbate-80 and sodium carbonate. Cleaning with the designated formulation resulted in a slight cleaning effect, but the biocompatibility did not reach the acceptance level in accordance with the criteria in the field of medical textiles because the cytotoxicity was still observed.

**[Table 14]**

| SAMPLE | Grade(N=3) | | | Reactivity |
|---|---|---|---|---|
| SPECIMEN | 3 | 3 | 3 | Severe |
| BLANK CONTROL | 0 | 0 | 0 | None |
| NEGATIVE CONTROL | 0 | 0 | 0 | None |
| POSITIVE CONTROL | 4 | 4 | 4 | Severe |

As described above, the antimicrobial fibrous material, the product, and the method for producing the bactericidal fibrous material or the bactericidal fibrous product according to the embodiments of the present invention have been described in detail using the various experimental examples and comparative examples. The various experimental examples, however, illustrate examples for embodying the technical idea of the present invention and are not intended to limit the embodiments of the present invention to these experimental examples. The present invention can be equally applied to other embodiments encompassed by the scope of claims. For example, the antimicrobial used in the antimicrobial fibrous material according to one aspect of the present invention can be used for objects such as wood, cloth, plastic, metal, ceramic, concrete, and the like other than the fibrous material. The antimicrobial can be bonded thereto through a coating material, and the like, so that it can also be used as an inner filler. The antimicrobial according to one aspect of the present invention may be dispersed in a dispersion medium such as water, an organic solvent, an adhesive, or the like to provide a beneficial material. The antimicrobial using titanium dioxide having adsorbed silver ions according to one aspect of the present invention can also take the form of printing inks and paints.

## Claims

1. A disinfectant comprising titanium dioxide that adsorbs silver ions, wherein
the disinfectant further comprises an aqueous resin binder to which a thermosetting crosslinking agent is applied, so that the disinfectant has biocompatibility; and
the titanium dioxide has a particle size of 100 nm or more and 1 µm or less and a weight distribution of particles, having a particle size of 100 nm or less, of less than 0.3%, so that the disinfectant does not exhibit environmental toxicity caused by nanoparticles.

2. The disinfectant according to claim 1, wherein at least a part of the silver ions is present in at least one of states including silver oxide, silver hydroxide, and elemental silver and in a state where the silver ions are adsorbed by the titanium dioxide.

3. An anti-infective fibrous material, wherein
the disinfectant according to claim 1 or 2 is applied to a fibrous material formed from a chemical fiber, so that the anti-infective fibrous material has a persistent antimicrobial effect in which transmission of bacteria on the fiber can be persistently blocked.

4. An anti-infective fibrous product, wherein using the anti-infective fibrous material according to claim 3.

5. An anti-infective fibrous product, wherein the disinfectant according to claim 1 or 2 is attached to a fibrous product formed from a chemical fiber.

6. A method for producing a disinfectant, comprising:
a silver ion solution-preparation step of preparing a solution containing silver ions by electrolyzing silver without using nanosilver having a particle size of less than 100 nm;
a step of causing titanium dioxide to adsorb the silver ions in the solution, the titanium dioxide having a particle size of 100 nm or more and 1 µm or less and a weight distribution of particles, having a particle size of 100 nm or less, of less than 0.3%; and
a step of mixing the titanium dioxide, having adsorbed the silver ions, and an aqueous resin binder to which a thermosetting crosslinking agent is applied, to prepare a resin emulsion.

7. A method for producing an anti-infective fibrous material or an anti-infective fibrous product, wherein comprising a step of applying the resin emulsion produced by the method for producing a disinfectant according to claim 6 to a fibrous material formed from a chemical fiber or a fibrous product formed from a chemical fiber with a rotating drum-type processing machine, to attach the titanium dioxide, having adsorbed the silver ions, to the fibrous material formed from the chemical fiber or the fibrous product formed from the chemical fiber so that the titanium dioxide is incorporated into yarn of the fibrous material or the fibrous product.

8. An apparatus for producing a disinfectant, wherein comprising:
a silver ion preparation part configured to prepare a solution containing silver ions;
a silver ion adsorption part configured to cause titanium dioxide to adsorb the silver ions in the solution, the titanium dioxide having a particle size of 100 nm or more and 1 µm or less and a weight distribution of particles, having a particle size of 100 nm or less, of less than 0.3%; and
a resin emulsion preparation part configured to mix the titanium dioxide, having adsorbed the silver ions, with an aqueous resin binder to which a thermosetting crosslinking agent is applied, to prepare a resin emulsion.

9. An apparatus for producing an anti-infective fibrous material or an anti-infective fibrous product, wherein comprising an attachment part configured to apply the resin emulsion prepared with the apparatus according to claim 8 to a fibrous material formed from a
chemical fiber or a fibrous product formed from a chemical fiber with a rotating drum-type processing machine, to attach the titanium dioxide, having adsorbed the silver ions, to the fibrous material formed from the chemical fiber or the fibrous product formed from the chemical fiber so that the titanium dioxide is incorporated into yarn of the fibrous material or the fibrous product.
